(19) Europäisches Patentamt
European Patent Office
Office européen des brevets

(11) Veröffentlichungsnummer: **0 084 313**
**B1**

(12) # EUROPÄISCHE PATENTSCHRIFT

(45) Veröffentlichungstag der Patentschrift: **16.10.85**

(51) Int. Cl.⁴: **C 07 C 119/042**, C 08 G 18/72, C 08 K 5/01

(21) Anmeldenummer: **83100013.8**

(22) Anmeldetag: **04.01.83**

(54) **Verfahren zur Herstellung wässriger Polyisocyanat-Emulsionen.**

(30) Priorität: **15.01.82 DE 3201111**

(43) Veröffentlichungstag der Anmeldung: **27.07.83 Patentblatt 83/30**

(45) Bekanntmachung des Hinweises auf die Patenterteilung: **16.10.85 Patentblatt 85/42**

(84) Benannte Vertragsstaaten: **AT BE CH DE FR IT LI SE**

(56) Entgegenhaltungen:
**EP - A - 0 007 532**
**EP - A - 0 013 112**
**DE - B - 2 832 509**

(73) Patentinhaber: **BAYER AG, Konzernverwaltung RP Patentabteilung, D-5090 Leverkusen 1 Bayerwerk (DE)**

(72) Erfinder: **Sachs, Hanns Immo, Ing. grad., Semmelweisstrasse 149, D-5000 Köln 80 (DE)**
Erfinder: **Kasparek, Peter, Ing. grad., Kattowitzer Strasse 8, D-5000 Köln 80 (DE)**
Erfinder: **Peters, Robert, Hermann-Ost-Strasse 36, D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung betrifft ein Verfahren zur Herstellung wässeriger Polyisocyanat-Emulsionen, wobei die Emulgierung von nicht-hydrophil modifizierten, organischen Polyisocyanaten ohne Zusatz externer Emulgatoren in Gegenwart von Paraffin-Dispersionen bewirkt wird.

Presswerkstoffe wie z.B. Spanplatten, Verbundplatten oder andere Formkörper werden gewöhnlich so hergestellt, dass man das anorganische oder organische Rohmaterial, z.B. eine Masse aus Holzschnitzeln, Holzfasern oder andere Lignocellulose enthaltendem Material, mit Bindemitteln, z.B. wässerigen Dispersionen oder Lösungen von Harnstoff/Formaldehyd- oder Phenol/Formaldehyd-Harzen, heiss verpresst. Es ist auch bekannt, als Bindemittel für Pressplatten anstelle von Harnstoff/Formaldehyd- oder Phenol/Formaldehyd-Harzen Isocyanatlösungen zu verwenden (DE-AS Nr. 1271984; DE-OS Nr. 1653177).

Hierbei, d.h. vor allem bei der Herstellung von Holzspanplatten, müssen zur Einhaltung der Normvorschriften für das Bauwesen (z.B. DIN 68763) bekanntlich Hydrophobierungsmittel in Form von praxisüblichen wässerigen Paraffindispersionen separat zugesetzt werden, da eine Vermischung mit unmodifiziertem Polyisocyanat als nicht möglich angesehen wird (Sachs, 1977, Holz-Zentralblatt Nr. 20, Seiten 295-296; Ball/Redman, 1979, Holz-Zentralblatt Nr. 88, Seite 1291). Hierdurch ist eine universelle Anwendung von Isocyanaten bei der Spanplattenherstellung sehr erschwert.

Weiterhin ist ein Verfahren zur Herstellung von Platten oder Formgegenständen bekannt geworden, welches darin besteht, dass eine Mischung aus Lignocellulosematerial und einer wässerigen Emulsion eines organischen Polyisocyanates als Bindemittel heiss verpresst wird (DE-OS Nrn. 2610552, 2703271). Die bei der Holzspanplattenherstellung erforderlichen wässerigen Paraffindispersionen können hierbei separat oder in Mischung mit der vorher fertiggestellten wässerigen Isocyanatemulsion appliziert werden (Ball/Redman, 1979, Holz-Zentralblatt Nr. 88, Seite 1291; DE-OS Nr. 2948015). Diese wässerigen Emulsionen haben aber den wesentlichen Nachteil, dass zu ihrer Herstellung teure Isocyanatmodifizierungsverfahren zur emulgierfähigen Hydrophilierung und/oder besondere und z.T. teure Emulgatoren eingesetzt werden müssen, die die Bindemittelkosten um 20 bis 30% erhöhen, wodurch die Wettbewerbsfähigkeit derartiger Isocyanatbindemittel gegenüber den konventionellen Bindemitteln in Frage gestellt wird. Darüber hinaus kommen bei den emulgierfähig modifizierten Isocyanaten (vgl. DE-A Nrn. 2921681, 2921726, 2610552, 2703271 und dort zitierte Literatur) Lagerungsprobleme der Produkte selbst und der beleimten Späne erschwerend hinzu.

Der Erfindung liegt die Aufgabe zugrunde, die oben beschriebenen Nachteile zu überwinden und ein Verfahren zur Herstellung neuer wässeriger Emulsionen zur Verfügung zu stellen, die auch ohne Zusatzmittel (z.B. spezielle Emulgatoren oder durch teure Modifizierungsschritte der Isocyanate zur Hydrophilierung und Selbstemulgierbarkeit) ein Optimum hinsichtlich einfacher Herstellung, unkomplizierter Verarbeitungsbedingungen, verminderter Reaktivität gegenüber Wasser und guter Wirtschaftlichkeit darstellen.

Diese Aufgabe wird in für den Fachmann überraschend einfacher Weise mittels des erfindungsgemässen Verfahrens gelöst.

Gegenstand der vorliegenden Erfindung ist somit ein Verfahren zur Herstellung wässeriger Emulsionen aus organischen Polyisocyanaten, wässerigen Paraffin-Dispersionen und gegebenenfalls zusätzlichem Wasser, dadurch gekennzeichnet, dass

A) 5 bis 70 Gew.-Teile, vorzugsweise 10 bis 60 Gew.-Teile, eines nicht-hydrophil-emulgierfähig modifizierten, emulgatorfreien Polyisocyanats und

B) 30 bis 95 Gew.-Teile (vorzugsweise 40 bis 90 Gew.-Teile) einer wässerigen Paraffindispersion mit einem Paraffinanteil von 3 bis 65 Gew.-%, gegebenenfalls

C) übliche Additive

in so viel Wasser ohne Emulgatorzusatz emulgiert werden, dass Emulsionen mit einem Feststoffgehalt aus A) + B) von 6 bis 90 Gew.-%, vorzugsweise 10 bis 70 Gew.-%, vorliegen.

Zur Herstellung der erfindungsgemässen Emulsionen können z.B. praxisübliche Paraffindispersionen in vorliegender Form, gegebenenfalls in mit Wasser weiter verdünnter Form, mit den Polyisocyanaten gemischt werden.

Als geeignete Paraffindispersionen seien beispielhaft durch Dispersion von Paraffinen in Gegenwart von Dispergierhilfsmitteln auf Basis von kationischen Polyelektrolyten gemäss DE-OS Nr. 2948015 erhaltene Dispersionen genannt. Jedoch können auch Dispersionen entsprechend US-PS Nrn. 2655496, 3965032 oder entsprechend entwickelte Produkte der Mobil Oil, wie Mobilcer-A, -331 oder Mobil Oil-Versuchsprodukt ED 80/196 (vgl. G.W. Ball *et al.*, Holz-Zentralblatt Nr. 88 vom 23. Juli 1979; bzw. H.I. Sachs, Holz-Zentralblatt 103, Nr. 20, Seiten 295-296 und Nr. 25, Seiten 384-388 [1977]) verwendet werden.

Die wässerigen Emulsionen werden in technischen Anlagen durch Vermischen der Ausgangskomponenten in speziellen Mischaggregaten erzeugt, beispielsweise in Statikmischern, Rührwerksmischköpfen, Inline-Ultra-Turrax-Aggregaten, Hochdruckmischköpfen bzw. Hochdruckinjektionsimpfblöcken.

Die Emulsionen können sowohl chargenweise als auch kontinuierlich hergestellt und verarbeitet werden, wobei in der Praxis kontinuierliche Verfahren wegen der damit verbundenen Erhöhung der Produktionssicherheit bevorzugt eingesetzt werden.

Als Isocyanatkomponente kommen bei der Herstellung der erfindungsgemässen Emulsionen aliphatische, cycloaliphatische, araliphatische, aromatische und heterocyclische Polyisocyanate in Betracht, wie sie z.B. von W. Siefken in Justus Liebigs Annalen der Chemie, 562, Seiten 75 bis 136, beschrieben werden, beispielsweise solche der Formel

$$Q(NCO)_n$$

in der

n 2 bis 4, vorzugsweise 2, und

Q einen aliphatischen Kohlenwasserstoffrest mit 2 bis 18, vorzugsweise 6 bis 10 C-Atomen, einen cycloaliphatischen Kohlenwasserstoffrest mit 4 bis 23, vorzugsweise 5 bis 13 C-Atomen, einen aromatischen Kohlenwasserstoffrest mit 6 bis 23, vorzugsweise 6 bis 13 C-Atomen, oder einen araliphatischen Kohlenwasserstoffrest mit 8 bis 15, vorzugsweise 8 bis 13 C-Atomen,

bedeuten, z.B. 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-B Nr. 1202785, US-PS Nr. 3401190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Napthtylen-1,5-diisocyanat.

Ferner kommen beispielsweise erfingungsgemäss in Frage: Triphenylmethan-4,4', 4''-triisocyanat, Polyphenyl-polymethylen-polyisocyanate, wie sie durch Anilin-Formaldehyd-Kondensation und anschliessende Phosgenierung erhalten und z.B. in den GB-PS Nrn. 874430 und 848-671 beschrieben werden, m- und p-Isocyanatophenylsulfonylisocyanate gemäss der US-PS Nr. 3454606, perchlorierte Arylpolyisocyanate, wie sie z.B. in der DE-AS Nr. 1157601 (US-PS Nr. 3277138) beschrieben werden, Carbodiimidgruppen aufweisende Polyisocyanate, wie sie in der DE-PS Nr. 1092007 (US-PS Nr. 3152162) sowie in den DE-OS Nrn. 2504400, 2537685 und 2552350 beschrieben werden, Norbornan-Diisocyanate gemäss US-PS Nr. 3492330, Allophanatgruppen aufweisende Polyisocyanate, wie sie z.B. in der GB-PS Nr. 994890, der BE-PS Nr. 761626 und der NL-OS Nr. 7102524 beschrieben werden, Isocyanuratgruppen aufweisende Polyisocyanate, wie sie z.B. in der US-PS Nr. 3001973, in den DE-PS Nrn. 1022789, 1222067 und 1027394 sowie in den DE-OS Nrn. 1929034 und 2004048 beschrieben werden, Urethangruppen aufweisende Polyisocyanate, wie sie z.B. in der BE-PS Nr. 752261 oder in den US-PS Nrn. 3394164 und 3644457 beschrieben werden, acylierte Harnstoffgruppen aufweisende Polyisocyanate gemäss der DE-PS Nr. 1230778, Biuretgruppen aufweisende Polyisocyanate, wie sie z.B. in den US-PS Nrn. 3124605, 3201372 und 3124605 sowie in der GP-PS Nr. 889050 beschrieben werden, durch Telomerisationsreaktionen hergestellte Polyisocyanate, wie sie z.B. in der US-PS Nr. 3654106 beschrieben werden, Estergruppen aufweisende Polyisocyanate, wie sie z.B. in den GB-PS Nrn. 965474 und 1077956, in der US-PS Nr. 3567763 und in der DE-PS Nr. 1231688 genannt werden, Umsetzungsprodukte der o.g. Isocyanate mit Acetalen gemäss der DE-PS Nr. 1072385 und polymere Fettsäureester enthaltende Polyisocyanate gemäss der US-PS Nr. 3455883.

Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren (TDI), Polyphenyl-polymethylen-polyisocyanate, wie sie durch Anilin-Formaldehyd-Kondensation und anschliessende Phosgenierung hergestellt werden (rohes MDI) und Carbodiimidgruppen, Urethangruppen, Allophanatgruppen, Isocyanuratgruppen, Harnstoffgruppen, Biuretgruppen oder andere, der Isocyanatchemie entsprechende Gruppen aufweisende Polyisocyanate (modifizierte Polyisocyanate), insbesondere solche modifizierten Polyisocyanate, die sich vom 2,4- und/oder 2,6-Toluylendiisocyanat bzw. vom 4,4'- und/oder 2,4'- und/oder 2,2'-Diphenylmethandiisocyanat ableiten.

Für die Herstellung der erfindungsgemässen Emulsionen können auch endständige Isocyanatgruppen aufweisende Prepolymere mit einem mittleren Molekulargewicht von ca. 300 bis 2000 eingesetzt werden, wie sie durch Umsetzung von höhermolekularen und/oder niedermolekularen Polyolen mit einem Überschuss an Polyisocyanat in an sich bekannter Weise erhalten werden. In diesem Zusammenhang geeignete höhermolekulare Polyole sind insbesondere zwei bis acht Hydroxylgruppen aufweisende Verbindungen, speziell solche der Molmassen 400 bis 10000, vorzugsweise 800 bis 5000, z.B. mindestens zwei, in der Regel zwei bis acht, vorzugsweise aber zwei bis vier, Hydroxylgruppen aufweisende Polyester, Polyether, Polythioether, Polyacetale, Polycarbonate und Polyesteramide, wie sie beispielsweise für die Herstellung von homogenen und von zellförmigen Polyurethanen an sich bekannt sind:

a) Die in Frage kommenden, Hydroxylgruppen aufweisenden Polyester sind z.B. Umsetzungsprodukte von mehrwertigen, vorzugsweise zweitwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, di- und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Formit, Methylglykosid, ferner Di-, Tri-, Tetra- und höhere Polyethylenglykole, Di-, Tri-, Tetra- und höhere Polyproylenglykole sowie Di-, Tri-, Tetra- und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

b) Auch die erfindungsgemäss in Frage kommenden, mindestens zwei, in der Regel zwei bis acht, vorzugsweise zwei bis drei, Hydroxylgruppen aufweisenden Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyether, wie sie z.B. in den DE-AS Nrn. 1176358 und 1064938 beschrieben werden, sowie auf Formit oder Formose gestartete Polyether (DE-OS Nrn. 2639083 bzw. 2737951) kommen erfindungsgemäss in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch OH-Gruppen aufweisende Polybutadiene sind erfindungsgemäss geeignet.

c) Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z.B. um Polythiomischether, Polythioetherester oder Polythioetheresteramide.

d) Als Polyacetale kommen z.B. die aus Glykolen, wie Diethylenglykol, Triethylenglykol, 4,4'-Dioxethoxydiphenyldimethylmethan, Hexandiol und Formaldehyd herstellbaren Verbindungen in Frage. Auch durch Polymerisation cyclischer Acetale wie z.B. Trioxan (DE-OS Nr. 1694128) lassen sich erfindungsgemäss geeignete Polyacetale herstellen.

e) Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Di-, Tri-, Tetra-ethylenglykol oder Thiodiglykol mit Diarylcarbonaten, z.B. Diphenylcarbonat, oder Phosgen hergestellt werden können (DE-AS Nrn. 1694080, 1915908 und 2221751; DE-OS Nr. 2605024).

f) Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

g) Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke, sind verwendbar. Auch Anlagerungsprodukte von Alkylenoxiden an Phenol-Formaldehyd-Harze oder auch an Harnstoff-Formaldehyd-Harze sind erfindungsgemäss einsetzbar.

Geeignete niedermolekulare Polyole (Molmasse 62 bis 399) sind z.B. die oben als Ausgangskomponenten für die Herstellung der höhermolekularen Polyole genannten Verbindungen.

Erfindungsgemäss werden ferner oft Katalysatoren mitverwendet. Als mitzuverwendende Katalysatoren kommen solche der an sich bekannten Art in Frage, z.B. tertiäre Amine, wie Triethylamin, Tributylamin, N-Methylmorpholin, N-Ethyl-morpholin, N-Co-comorpholin, N,N,N',N'-Tetramethyl-ethylendiamin, 1,4-Diaza-bicyclo-(2,2,2)-octan, N-Methyl-N'-dimethylaminoethylpiperazin, N,N-Dimethylbenzylamin, Bis-(N,N-diethylaminoethyl)-adipat, N,N-Diethylbenzylamin, Pentamethyldiethylentriamin, N,N-Dimethylcyclohexylamin, N,N,N',N'-Tetramethyl-1,3-butandiamin, N,N-Dimethyl-β-phenylethylamin, 1,2-Dimethylimidazol, 2-Methylimidazol. Als Katalysatoren kommen auch an sich bekannte Mannichbasen aus sekundären Aminen, wie Dimethylamin, und Aldehyden, vorzugsweise Formaldehyd, oder Ketonen, wie Aceton, Methylethylketon oder Cyclohexanon und Phenolen, wie Phenol, Nonylphenol oder Bisphenol in Frage.

Gegenüber Isocyanatgruppen aktive Wasserstoffatome aufweisende tertiäre Amine als Katalysatoren sind z.B. Triethanolamin, Triisopropanolamin, N-Methyl-diethanolamin, N-Ethyl-diethanolamin, N,N-Dimethylethanolamin sowie deren Umsetzungsprodukte mit Alkylenoxiden, wie Propylenoxid und/oder Ethylenoxid.

Als Katalysatoren kommen ferner Silaamine mit Kohlenstoff-Silizium-Bindungen, wie sie z.B. in der DE-PS Nr. 1229290 (entsprechend der US-PS Nr. 3620984) beschrieben sind, in Frage, z.B. 2,2,4-Trimethyl-2-silamorpholin und 1,3-Diethylaminomethyl-tetramethyldisiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden. Auch organische Metallverbindungen, insbesondere organische Zinnverbindungen, können als Katalysatoren verwendet werden. Als organische Zinnverbindungen kommen vorzugsweise Zinn-(II)-salze von Carbonsäuren wie Zinn-(II)-acetat, Zinn-(II)-octoat, Zinn-(II)-ethylhexoat und Zinn-(II)-laurat und die Zinn-(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht. Selbstverständlich können alle o.g. Katalysatoren als Gemische eingesetzt werden.

Weitere Vertreter von erfindungsgemäss zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die nach dem erfindungsgemässen Verfahren erhaltenen Emulsionen werden, wie schon erwähnt, vorzugsweise als Bindemittel für lignocellulosehaltige Werkstoffe eingesetzt. In diesem Zusammenhang haben sich vor allem Emulsionen bewährt, deren Polyisocyanatkomponente (s. DE-AS Nr. 2711958) das Phosgenierungsprodukt der nicht destillierten Bodenfraktion ist, wie sie bei der Entfernung von 25 bis 90 Gew.-%, vorzugsweise 30 bis 98 Gew.-% an 2,2'-, 2,4'- und/oder 4,4'-Diaminodiphenylmethan aus einem Anilin/Formaldehyd-Kondensat entsteht, oder aber jene nicht destillierte Bodenfraktion ist, wie sie bei der Entfernung von 25 bis 90 Gew.-%, vorzugsweise 30 bis 85 Gew.-% an 2,2'-, 2,4'- und/oder 4,4'-Diisocyanatodiphenylmethan aus dem rohen Phosgenierungsprodukt eines Anilin/Formaldehyd-Kondensates erhalten wurde, wobei die Isocyanatkomponente 35 bis 70 Gew.-%, vorzugsweise 45 bis 60 Gew.-%, an Diisocyanatodiphenylmethanen enthält, wobei der Gehalt an 2,4'-Diisocyanatodiphenylmethan zwischen 1 und 8 Gew.-%, vorzugsweise zwischen 2 und 5 Gew.-%, und der Gehalt an 2,2'-Diisocyanatodiphenylmethan zwischen 0 und 2 Gew.-% beträgt, und wobei die Isocyanatkomponente eine Viskosität bei 25° C von 50 bis 600 mPa·s, vozugsweise 200 bis 500 mPa·s, und einen NCO-Gehalt zwischen 28 und 32 Gew.-% aufweist.

Wie aus dem oben Gesagten hervorgeht, werden derartige Bodenfraktionen beispielsweise bei der Entfernung von 45 bis 90 Gew.-%, vorzugsweise 55 bis 85 Gew.-%, an 4,4'-Diisocyanatodiphenylmethan aus einem rohen Diphenylmethandiisocyanat erhalten, welches mehr als 85 Gew.-%, vorzugsweise mehr als 90 Gew.-%, an 4,4'-Diisocyanatodiphenylmethan enthält. Ein solches rohes Diphenylmethandiisocyanat ist beispielsweise nach dem Verfahren der DE-OS Nr. 2356828 zugänglich.

Eine andere Möglichkeit besteht darin, aus einem rohen Phosgenierungsprodukt mit einem Gehalt an Diisocyanatodiphenylmethanisomeren von 60 bis 90 Gew.-%, vorzugsweise 65 bis 75 Gew.-%, welches 20 bis 60, vorzugsweise 30 bis 40 Gew.-%, an 2,4'-Isomeren enthält, 25 bis 80 Gew.-%, vorzugsweise 30 bis 60 Gew.-%, an 2,4'-Diisocyanatodiphenylmethan und gegebenenfalls 4,4'- bzw. 2,2'-Diisocyanatodiphenylmethan abzudestillieren. In jedem Falle kann dabei die Destillation so geführt werden, dass der Rückstand die oben angegebene Zusammensetzung aufweist. Als Polyisocyanat kann auch ein solches eingesetzt werden, welches durch Phosgenierung der nicht destillierten Bodenfraktion hergestellt wurde, wie sie beim Abdestillieren von 25 bis 80 Gew.-% an 2,4'- und gegebenenfalls 4,4'-Diaminodiphenylmethan aus rohem Diaminodiphenylmethan mit einem Gehalt von 60 bis 90 Gew.-% an reinem Diaminodiphenylmethan entsteht, welches 20 bis 60 Gew.-% an 2,4'-Diaminodiphenylmethan enthält.

Selbstverständlich ist es jedoch auch möglich (und in vielen Fällen in der Praxis auch einfacher), die gewünschte Isomeren- und Oligomerenzusammensetzung des Polyisocyanatgemisches durch Verschneiden verschiedener Bodenfraktionen zu erhalten.

Ausser den bevorzugten unmodifizierten Polyisocyanaten können auch selbsttrennend modifizierte Polyisocyanate zur Vermischung mit den Paraffindispersionen eingesetzt werden. Derartige, in Richtung auf selbsttrennende Wirkung modifizierte Polyisocyanate werden z.B. in der DE-OS Nr. 3109317 (US-PS Nr. 4258169), der DE-OS Nr. 2932175 (US-PS Nr. 4257995) und der US-PS Nr. 4257996 beschrieben, wo man Polyisocyanate mit Phosphorverbindungen modifiziert. Eine Modifizierung von Polyisocyanaten mit 0,1 bis 30 Gew.-% an Phosphorsäure-$C_1$-$C_7$-Dialkylestern, vorzugsweise Phosphorsäure-di-n-butylester, wird in der Deutschen Patentanmeldung P Nr. 3108538 beschrieben. Diese modifizierten Polyisocyanate werden erfindungsgemäss ohne Emulgatorzusatz mit der Paraffin-Dispersion vermischt.

Geeignete lignocellulosehaltige Rohstoffe, welche mit den Emulsionen nach dem erfindungsgemässen Verfahren gebunden werden können, sind beispielsweise Holz, Rinde, Kork, Bagasse, Stroh, Flachs, Bambus, Alfagras, Reisschalen, Sisal- und Kokosfasern. Das Material kann dabei in Form von Granulaten, Spänen, Fasern oder Mehl vorliegen und einen Wassergehalt von z.B. 0 bis 35 Gew.-%, vorzugsweise von 5 bis 25 Gew.-%, aufweisen. Es wird mit dem zu verwendenden Bindemittel in einer Menge von 1 bis 100, vorzugsweise 2 bis 12 Gew.-%, versetzt und – im allgemeinen unter Einwirkung von Druck und Hitze – zu Platten oder Formkörpern verpresst.

Selbstverständlich können jedoch auch aus anderen organischen (z.B. Kunststoffabfälle aller Art) und/oder anorganischen Rohstoffen (z.B. Blähglimmer oder Silikatkugeln) Presskörper hergestellt werden.

Bei der Verwendung wird das zu verpressende Material mit dem Bindemittel vermischt, und zwar zweckmässig durch Besprühen mit der wässerigen Emulsion, um so eine möglichst homogene Verteilung zu erreichen. Es wurde gefunden, dass die erfindungsgemäss hergestellten, wässerigen Emulsionen eine ausreichend geringe Viskosität besitzen, dass sie mit einem Gehalt bis zu 70% Isocyanat versprüht werden können, während die Lösungen von Harnstoff/Formaldehyd- und Phenol/Formaldehyd-Harzen, die gewöhnlich bei der Herstellung von Pressplatten und ähnlichen Materialien verwendet werden, im allgemeinen nur bei Feststoffgehalten von unter 40% versprühbar sind. Die Erfindung liefert somit ein Arbeitsverfahren, bei dem weniger Wasser zugegen ist als bisher, so dass weniger Wasser während der Heissverpresungsstufe bzw. der nachfolgenden Konditionierung entfernt zu werden braucht. Darüber hinaus braucht das Lignocellulosematerial nicht so stark getrocknet zu werden, bevor es mit dem Bindemittel vermischt wird.

Da die Polyisocyanate nicht-hydrophil modifiziert sind und keine weiteren Emulgatoren zugesetzt enthalten, werden auch Holzspanplatten mit der geringstmöglichen Wasseraufnahme bzw. Wasserquelltendenz erhalten.

In der Praxis können Verzögerungsperioden zwischen den einzelnen Verfahrensstufen (Herstellung der Emulsion; Besprühen des zu verwendenden Materials) auftreten sowie auch Verzögerungen infolge von Arbeitsfehlern oder infolge einer Neueinstellung der Verfahrensbedingungen. In wünschenswerter Weise verläuft jedoch die Umsetzung zwischen dem Isocyanat und dem Wasser in den erfindungsgemässen Emulsionen genügend langsam, so dass eine Verzögerung von mindestens 2 Stunden bis zu mehreren Stunden zwischen Herstellung der Emulsion und dem Heisspressen in Kauf genommen werden kann. Die Reaktionsgeschwindigkeit kann noch verlangsamt werden, indem die Reaktivität der Polyisocyanate gegenüber Wasser verändert wird. So kann man beispielsweise durch einen erhöhten Anteil an 2,4'- und/oder 2,2'-Diphenylmethandiisocyanat die Reaktionsgeschwindigkeit deutlich herabsetzen.

In analoger Weise können auch mehrlagige Platten oder Formteile aus Furnieren, Papieren oder Geweben hergestellt werden. Auch mehrschichtige Platten oder Formteile aus Furnieren und Streifen-, Stab- oder Stäbchen-Mittellagen, sogenannte Tischlerplatten, können hergestellt werden, indem man die Furniere wie oben beschrieben mit der Polyisocyanatemulsion behandelt und anschliessend mit den Mittellagen – in der Regel bei erhöhter Temperatur und erhöhtem Druck – verpresst. Vorzugsweise werden dabei Temperaturen von 100 bis 250° C, besonders bevorzugt 130 bis 220° C, eingehalten. Der Anfangspressdruck liegt auch hier vorzugsweise zwischen 5 und 150 bar; im Laufe des Pressvorganges fällt dann der Druck meist bis gegen 0 ab.

Die Polyisocyanatemulsionen können auch in Kombination mit den oben beschriebenen Polyhydroxylverbindungen in einem NCO/OH-Verhältnis zwischen 1:2 bis 10:1, vorzugsweise 1,5:1 bis 1:1, eingesetzt werden. Es ist dabei möglich, die beiden Komponenten getrennt oder als reaktives Gemisch einzusetzen. Praktische Bedeutung haben derartige Kombinationen von Polyisocyanat und Polyhydroxylverbindungen als Bindemittel z.B. bei der Bindung von Korkschrot. Es ist auch möglich, an sich bekannte Treibmittel in einer Menge von ca. 0,5 bis 30 Gew.-%, bezogen auf Binde- oder Imprägniermittel und/oder andere, die Schaumbildung oder die chemische Reaktion zwischen Polyisocyanaten, lignocellulosehaltigem Material und gegebenenfalls Polyhydroxylverbindungen beeinflussende Additive wie Stabilisatoren, Katalysatoren und Aktivatoren in einer Menge von 0,05 bis 10 Gew.-%, bezogen auf Binde- bzw. Imprägniermittel, zuzusetzen.

Die als Bindemittel zu verwendenden Polyisocyanatemulsionen können auch mit den in der Holzwerkstoffindustrie bisher überwiegend eingesetzten wässerigen Lösungen von Kondensationsprodukten aus Formaldehyd mit Harnstoff und/oder Melamin und/oder Phenol kombiniert werden, aber auch mit anderen, bisher weniger üblichen Binde- und Imprägniermitteln, wie z.B. Sulfitablauge (Lignin-Sulfonat oder andere technische Ligninlösungen des Holzaufschlusses) oder gerbstoffartigen Verbindungen wie Tannin, wo z.B. ein Mischungsverhältnis der erfindungsgemässen mit diesen zusätzlichen Bindemitteln zwischen 1:10 und 10:1, vorzugsweise zwischen 1:5 und 5:1, eingehalten werden kann und wobei man die Polyisocyanatemulsion und die zusätzlichen Bindemittel entweder separat oder auch in Mischung einsetzen kann.

Besonders vorteilhaft sind derartige Kombinationen bei der Herstellung von mehrschichtigen Platten mit speziellen Eigenschaften. Man kann z.B. die äusseren Schichten mit konventionellen Klebstoffen (allein oder gemeinsam mit der Polyisocyanatemulsion) und eine oder mehrere innere Schichten mit den erfindungsgemäss zu verwendenden Polyisocyanatemulsionen (allein oder gemeinsam mit konventionellen Klebstoffen) versetzen und anschliessend miteinander verpressen.

Infolge ihrer hervorragenden mechanischen Eigenschaften eignen sich die hergestellten Platten oder Formteile auf Basis von lignocellulosehaltigen oder anderen organischen und/oder anorganischen Rohstoffen vor allem für eine Verwendung im Bauwesen. Um den Platten oder Formteilen die hierfür im allgemeinen erforderliche Beständigkeit gegen Pilzbefall, Insektenfrass oder Feuereinwirkung zu verleihen, kann man den Bindemitteln oder den Rohstoffen die handelsüblichen Additive (C), wie organische oder anorganische Schutzmittel, in reiner Form oder als Lösung in einer Menge von ca. 0,05 bis 30 Gew.-%, vorzugsweise 0,5 bis 20 Gew.-%, bezogen auf gesamtes Material, zusetzen. Als Lösungsmittel kommen in Frage: Wasser oder organische Lösungsmittel, z.B. Rückstandsöle aus der Erdölaufarbeitung, Chlorkohlenwasserstoffe u.a. Die Verleimungsqualität wird hierduch im allgemeinen

nicht beeinträchtigt. Im Gegensatz zu Phenol/Formaldehyd-Harz-verleimten Platten treten bei den erfindungsgemäss hergestellten Werkstoffen dabei vorteilhafterweise weder Salzausblühungen noch „Ausbluten" ein.

Bedingt durch die hohe Klebkraft der Bindemittel neigen die hiermit imprägnierten bzw. gebundenen Formkörper häufig dazu, an den Oberflächen der heissen Pressen oder Formen zu haften. Dies kann durch Trennmittel, welche man den Isocyanatemulsionen zusetzt, vermieden werden. Eine andere Lösung besteht darin, die Trennmittel in reiner Form oder als Lösung auf die mit den Presslingen in Berührung kommenden metallischen Oberflächen oder die Formlingsoberfläche aufzubringen. Als Trennmittel kommen hierbei alle bisher zu diesem Zweck vorgeschlagenen Substanzen in Frage. Bevorzugt sind jedoch gemäss DE-OS Nr. 2325926 Verbindungen, welche bei Isocyanaten eine Isocyanuratbildung katalysieren, beispielsweise Phenol-Mannichbasen, Derivate des Hexahydrotriazins oder Alkalisalze von Carbonsäuren. Eine weitere Lösung, die Haftung auszuschalten, besteht darin, eine Trennschicht zwischen Pressling und metallischer Pressenoberfläche anzuordnen, wobei die Trennschicht aus Bahnen, Folien oder Zerkleinerungsmaterial verschiedener Rohstoffe (z.B. Kunststoffe, Papier, Holz, Metall) bestehen kann. Wie schon mehrfach erwähnt, können mit den erfindungsgemäss zu verwendenden Isocyanatemulsionen im Vergleich zu herkömmlichen Bindemitteln auf Basis von Phenol/Formaldehyd- oder Harnstoff/Formaldehyd-Harzen bei der Spanplattenherstellung wesentliche Verbesserungen, sowohl im Hinblick auf die mechanischen Eigenschaften als auch in verfahrenstechnischer Hinsicht, erzielt werden. So ist es im Falle von Holzspanplatten möglich, entweder bei gleicher Bindemittelmenge wie bei Phenol/Formaldehyd- bzw. Harnstoff/Formaldehyd-Harzen eine um bis zu 50% erhöhte Biegesteifigkeit (neben einer Verbesserung anderer mechanischer Eigenschaften) oder aber bei einer um etwa 25 bis 70% erniedrigten Bindemittelkonzentration ein gleiches mechanisches Eigenschaftsbild zu erreichen. Diese optimalen Werkstoffeigenschaften werden insbesondere dann erzielt, wenn als Bindemittel ein Polymethylen-Polyphenyl-Polyisocyanat mit der oben näher definierten Viskosität und Isomerenverteilung eingesetzt wird.

Es ist hierbei ohne Einfluss, ob das Polyisocyanatgemisch durch Abdestillieren von 2,4'- und/oder 4,4'-Diisocyanatodiphenylmethan aus rohem Diphenylmethandiisocyanat oder analog durch Abtrennen von reinem Diaminodiphenylmethan aus rohem Diaminodiphenylmethan und anschliessende Phosgenierung der so erhaltenen nicht destillierten Bodenfraktion aus Polyarylaminen hergestellt wurde.

Enthält das Polyisocyanat mehr als 75 Gew.-% an Diisocyanatodiphenylmethanen, so wird das physikalische Werteniveau der Spanplatte in der Regel verschlechtert. Sinkt andererseits der Gehalt an Diisocyanatodiphenylmethanen auf unter 35 Gew.-%, so wird im allgemeinen das Bindemittel bei Raumtemperatur zu hochviskos und lässt sich schlecht emulgieren.

Die folgenden Beispiele erläutern die Erfindung. Wenn nicht anders vermerkt, sind Zahlenangaben als Gewichtsteile bzw. Gewichtsprozente zu verstehen.

*Beispiel 1*

Aus 22 Teilen einer 65%igen wässerigen Paraffindispersion – Handelsprodukt ®Mobilcer 739 (Fa. Mobil Oil-AG) – und 158 Teilen Wasser wird eine 8%ige Paraffindispersion durch einfaches Verrühren hergestellt, in die die 55 Teile Polyisocyanat A aus DE-OS Nr. 2711958 mittels hochtourigem Rührer innerhalb 30 Sekunden emulgiert werden.

Anschliessend werden 2900 Teile industriell hergestellte Nadelholzspäne mit einem Feuchtigkeitsgehalt von 5% in einer Laborbeleimungsmaschine mittels Zweistoffwirbelstromdüsen mit der Emulsion besprüht und hieraus ein Formling auf einem Stahlzulageblech, das vorher mit einer wässerigen Kaliumacetat/Diethylenglykol-Lösung behandelt wurde, gebildet und die Oberfläche des Formlings ebenso mit der Trennmittellösung benetzt. Nach einer Presszeit von 3,2 Minuten bei einer Heizplattentemperatur von 170° C und einem Pressdruck von 25 bar, der nach ⅓ der Presszeit auf 5 bar reduziert wird, erhält man eine Spanplatte mit einer Querzugsfestigkeit von 0,76 MPa.

*Beispiel 2*

Aus 63 Teilen einer 35%igen wässerigen Paraffindispersion – Handelsprodukt ®Mobilcer ED 80/229 – und 126 Teilen Polyisocyanat B aus DE-OS Nr. 2711958 wird mittels Impfblocktechnik eine Emulsion hergestellt.

Sodann werden 2250 Teile Mittelschichtspäne, die aus einem Gemisch aus Nadelholz und Laubholz bestehen und einen Feuchtigkeitsgehalt von 7% aufweisen, mit 189 Teilen Emulsion versetzt. Anschliessend werden 980 Teile Nadelholz-Deckschichtspäne mit einem Feuchtigkeitsgehalt von 9% mit 240 Teilen eines handelsüblichen 45%igen schwach alkalischen Phenol/Formaldehyd-Harzes benetzt.

Aus mit PF-Harz beleimten Deckschichten und mit Isocyanatemulsion beleimter Mittelschicht werden 3schichtige Formlinge gebildet und bei 170° C Heizplattentemperatur verpresst.

Hieraus erhält man Spanplatten des Normtyps V 100 gemäss DIN 68763 mit einer V 100-Querzugsfestigkeit von 0,24 MPa und einer Dickenquellung nach 24 Stunden Wasserlagerung von 10,5%.

*Beispiel 3*

Eine Emulsion aus 143 Teilen Wasser, 17 Teilen Kaliumbifluorid (®Basilit SP der Fa. Desowag-Bayer-Holzschutz GmbH), 29 Teilen 50%ige Paraffindispersion (®Mobilcer 161 der Fa. Mobil Oil-AG) und 143 Teilen Polyisocyanat C aus DE-OS Nr. 2711958 wird mittels Hochdruckmischkopf hergestellt und damit 2950 Teile einer industriell hergestellten Spänemischung aus 50% Nadelholz

und 50% Laubholz mit einem Feuchtigkeitsgehalt von 5% benetzt. Hieraus wird zwischen zwei 1,5 mm starken Fichtenfurnieren als Deckschichten ein Formling gebildet, der wie unter Beispiel 1 erklärt, zur Aushärtung gebracht wird. Man erhält eine dekorative, pilzgeschützte Spanplatte hoher Biegefestigkeit in Faserrichtung der Furniere, die eine V 20-Querzugsfestigkeit von 1,08 MPa und eine V 100-Querzugsfestigkeit von 0,24 MPa aufweist.

## Patentansprüche

1. Verfahren zur Herstellung wässeriger Emulsionen aus organischen Polyisocyanaten, wässerigen Paraffindispersionen und gegebenenfalls zusätzlichem Wasser, dadurch gekennzeichnet, dass

A) 5 bis 70 Gew.-Teile eines nicht-hydrophil-emulgierfähig modifizierten, emulgatorfreien Polyisocyanats und

B) 30 bis 95 Gew.-Teile einer wässerigen Paraffindispersion mit einem Paraffinanteil von 3 bis 65 Gew.-%, gegebenenfalls

C) übliche Additive

D) in so viel Wasser ohne Emulgatorzusatz

emulgiert werden, dass Emulsionen mit einem Feststoffgehalt von 6 bis 90 Gew.-% vorliegen.

2. Verfahren nach Anspruch 1, dadurch gekennzeichnet, dass Komponente (A) das Phosgenierungsprodukt der nicht destillierten Bodenfraktion ist, wie sie bei der Entfernung von 25 bis 90 Gew.-% an 2,2'-, 2,4'- und/oder 4,4'-Diaminodiphenylmethan aus einem Anilin/Formaldehyd-Kondensat entsteht, oder die nicht destillierte Bodenfraktion ist, wie sie bei der Entfernung von 25 bis 90 Gew.-% an 2,2'-, 2,4'- und/oder 4,4'-Diisocyanatodiphenylmethan aus dem rohen Phosgenierungsprodukt eines Anilin/Formaldehyd-Kondensates erhalten wurde, wobei Komponente (A) 35 bis 70 Gew.-% an Diisocyanatodiphenylmethanen, davon 1 bis 8 Gew.-% 2,4'-Diisocyanatodiphenylmethan und 0 bis 2 Gew.-% an 2,2'-Diisocyanatodiphenylmethan, enthält, eine Viskosität bei 25° C von 50 bis 600 mPa·s und einen NCO-Gehalt zwischen 28 und 32 Gew.-% aufweist.

3. Verfahren nach Anspruch 1, dadurch gekennzeichnet, dass Komponente (A) ein Polyisocyanat ist, welches durch Abdestillieren von 45 bis 90 Gew.-% 4,4'-Diphenylmethandiisocyanat aus einem rohen Diphenylmethandiisocyanat mit einem Gehalt von mehr als 85 Gew.-% an 4,4'-Diphenylmethandiisocyanat als Bodenfraktion erhalten wurde oder welches durch Phosgenierung der nicht destillierten Bodenfraktion hergestellt wurde, wie sie beim Abdestillieren von 25 bis 90 Gew.-% an 2,2'-, 2,4'- und/oder 4,4'-Diaminodiphenylmethan aus einem Anilin/Formaldehyd-Kondensat entsteht.

4. Verfahren nach Anspruch 1, dadurch gekennzeichnet, dass Komponente (A) ein Polyisocyanat ist, welches durch Abdestillieren von 25 bis 80 Gew.-% an 2,4'- und gegebenenfalls 4,4'- bzw. 2,2'-Diisocyanatodiphenylmethan aus einem rohen Phosgenierungsprodukt mit einem Gehalt an Diisocyanatodiphenylmethanisomeren von 60 bis 90 Gew.-%, welches 20 bis 60 Gew.-% an 2,4'-Isomeren enthält, als Bodenfraktion erhalten wurde oder welches durch Phosgenierung der nicht destillierten Bodenfraktion hergestellt wurde, wie sie beim Abdestillieren von 25 bis 80 Gew.-% an 2,4'- und gegebenenfalls 4,4'-Diaminodiphenylmethan aus rohem Diaminodiphenylmethan mit einem Gehalt von 60 bis 90 Gew.-% an reinem Diaminodiphenylmethan entsteht, welches 20 bis 60 Gew.-% an 2,4'-Diaminodiphenylmethan enthält.

## Claims

1. Process for preparing aqueous emulsions of organic polyisocyanates, aqueous paraffin dispersions and optionally additional water, characterized in that

A) 5 to 70 parts by weight of a polyisocyanate which is free of emulsifiers and has not been modified hydrophilically to render it emulsifiable and

B) 30 to 95 parts by weight of an aqueous paraffin dispersion having a paraffin content of 3 to 65% by weight and optionally

C) customary additives

are emulsified

D) in such a quantity of water, without the addition of emulsifiers, that emulsions having a solid content of 6 to 90% by weight result.

2. Process according to Claim 1, characterized in that component (A) is the product of phosgenation of a non-distilled ground fraction of the type which forms on removing 25 to 90% by weight of 2,2'-, 2,4'- and/or 4,4'-diaminodiphenylmethane from an aniline/formaldehyde condensate, or component (A) is a non-distilled ground fraction of the type which has been obtained on removing 25 to 90% by weight of 2,2'-, 2,4'- and/or 4,4'-diisocyanatodiphenylmethane from the crude product of phosgenation of an aniline/formaldehyde condensate, component (A) containing 35 to 70% by weight of diisocyanatodiphenylmethanes, of which 1 to 8% by weight is 2,4'-diisocyanatodiphenylmethane and 0 to 2% by weight is 2,2'-diisocyanatodiphenylmethane, and having a viscosity at 25° C of 50 to 600 mPa·s and an NCO content of between 28 and 32% by weight.

3. Process according to Claim 1, characterized in that component (A) is a polyisocyanate which has been obtained as a ground fraction by distilling off 45 to 90% by weight of 4,4'-diphenylmethane diisocyanate from a crude diphenylmethane diisocyanate having a content of more than 85% by weight of 4,4'-diphenylmethane diisocyanate, or which has been produced by phosgenation of a non-distilled ground fraction of the type which forms when 25 to 90% by weight of 2,2'-, 2,4'-, and/or 4,4'-diaminodiphenylamine are distilled off from an aniline/formaldehyde condensate.

4. Process according to Claim 1, characterized in that component (A) is a polyisocyanate which has been obtained as a ground fraction by distilling off 25 to 80% by weight of 2,4'- and optionally 4,4'- or 2,2'-diisocyanatodiphenylmethane from a crude phosgenation product with a content of diisocyanatodiphenylmethane isomers of 60 to 90% by weight which contains 20 to 60% by weight of 2,4'-isomers, or which has been produced by phosgenation of a non-distilled ground fraction of the type which is formed on distilling off 25 to 80% by weight of 2,4'- and optionally 4,4'- diaminodiphenylmethane from crude diaminodiphenylmethane having a content of 60 to 90% by weight of pure diaminodiphenylmethane which contains 20 to 60% by weight of 2,4'-diaminodiphenylmethane.

## Revendications

1. Procédé de production d'émulsions aqueuses formées de polyisocyanates organiques, de dispersions aqueuses de paraffine et, le cas échéant, d'eau additionnelle, caractérisé en ce qu'on émulsionne

A) 5 à 70 parties en poids d'un polyisocyanate sans émulsionnant, rendu apte à former une émulsion non hydrophile et

B) 30 à 95 parties en poids d'une dispersion aqueuse de paraffine contenant une proportion de paraffine de 3 à 65% en poids, éventuellement

C) des additifs classiques

D) dans une quantité d'eau suffisante, sans addition d'émulsionnant, pour obtenir des émulsions ayant une teneur en matière solide de 6 à 90% en poids.

2. Procédé suivant la revendication 1, caractérisé en ce que le composant (A) est le produit de phosgénation de la fraction inférieure non distillée qui est produite par élimination de 25 à 90% en poids de 2,2'-, de 2,4'- et/ou de 4,4'-diaminodiphénylméthane d'un produit de condensation aniline/formaldéhyde ou la fraction inférieure non distillée qui a été obtenue lors de l'élimination de 25 à 90% en poids de 2,2'-, de 2,4'- et/ou de 4,4'-diisocyanatodiphénylméthane du produit brut de phosgénation d'un produit de condensation aniline/formaldéhyde, le composant (A) contenant 35 à 70% en poids de diisocyanatodiphénylméthanes dont 1 à 8% en poids de 2,4'-diisocyanatodiphénylméthane et 0 à 2% en poids de 2,2'-diisocyanatodiphénylméthane, présente une viscosité à 25° C de 50 à 600 MPa·s et a une teneur en NCO comprise entre 28 et 32% en poids.

3. Procédé suivant la revendication 1, caractérisé en ce que le composant (A) est un polyisocyanate qui a été obtenu comme fraction inférieure par élimination par distillation de 45 à 90% en poids de 4,4'-diphénylméthanediisocyanate d'un diphénylméthanediisocyanate brut ayant une teneur en 4,4'-diphénylméthanediisocyanate de plus de 85% ou qui a été produit par phosgénation de la fraction inférieure non distillée qui est formée lors de l'élimination par distillation de 25 à 90% en poids de 2,2'-, 2,4'- et/ou 4,4'-diaminodiphénylméthane d'un produit de condensation aniline/formaldéhyde.

4. Procédé suivant la revendication 1, caractérisé en ce que le composant (A) est un polyisocyanate qui a été obtenu comme fraction inférieure par élimination par distillation de 25 à 80% en poids de 2,4'- et le cas échéant de 4,4'- ou de 2,2'-diisocyanatodiphénylméthane d'un produuit brut de phosgénation ayant une teneur en isomères de diisocyanatodiphénylméthane de 60 à 90% en poids, qui contient 20 à 60% en poids d'isomère 2,4' ou qui a été produit par phosgénation de la fraction inférieure non distillée qui est formée lors de l'élimination par distillation de 25 à 80% en poids de 2,4'- et le cas échéant de 4,4'-diaminodiphénylméthane du diaminodiphénylméthane brut avec une teneur de 60 à 90% en poids de diaminodiphénylméthane pur qui contient 20 à 60% en poids de 2,4'-diaminodiphénylméthane.